# EUROPÄISCHE PATENTSCHRIFT

(11) **EP 2 035 721 B1**
(45) Veröffentlichungstag und Bekanntmachung des Hinweises auf die Patenterteilung: **18.11.2015**
(21) Anmeldenummer: 07785886.8
(22) Anmeldetag: 03.07.2007
(51) Int. Cl.: F16C 33/44

(54) **WÄLZLAGERKÄFIG**
ROLLING-BEARING CAGE
CAGE POUR ROULEMENT

(30) Priorität: 04.07.2006 DE 102006030836
(43) Veröffentlichungstag der Anmeldung: 18.03.2009
(73) Patentinhaber: Gebrüder Reinfurt GmbH & Co. KG, 97074 Würzburg (DE)
(72) Erfinder: NIEDERMEIER, Herbert, 97490 Poppenhausen (DE); LEHMANN, Dieter, 01640 Coswig (DE)
(74) Vertreter: Müller-Boré & Partner Patentanwälte PartG mbB
(86) Internationale Anmeldenummer: PCT/EP2007/005886
(87) Internationale Veröffentlichungsnummer: WO 2008/003466

(56) Entgegenhaltungen:
- WO-A-2005/042597
- US-A- 6 113 278
- US-A1- 2002 141 674

## Beschreibung

Die vorliegende Erfindung betrifft einen Käfig für ein Wälzlager, insbesondere für ein Kugellager, ein Wälzlager mit einem Käfig und die Verwendung eines Käfigs in einem hochtourigen Wälzlager mit einem Drehzahlkennwert n x dm > 1.000.000 mm/min, wobei n der Innenringdrehzahl entspricht und dm dem mittleren Lagerdurchmesser entspricht, wobei der mittlere Lagerdurchmesser dm sich berechnet aus der durch 2 dividierten Summe des Außendurchmessers und des Bohrungsdurchmessers, insbesondere für industrielle Spindellageranwendungen und im medizinischen Bereich, insbesondere in der Dentaltechnik.

Im Stand der Technik sind Verbundwerkstoffe, wie z. B. gewebeverstärktes Phenolharz beschrieben, die über genügend Leistungsfähigkeit bzgl. Reibung und Verschleiß verfügen, um in hochtourigen Kugellageranwendungen sehr gute Lebensdauerwerte zu erzielen. Die günstigen Eigenschaften dieses Werkstoffes können verbessert werden, indem in das Baumwollgewebe zusätzlich Öl eingelagert wird, was in Anwendungen, in denen Mangelschmierung herrscht, zusätzlich lebensdauerverlängernd wirkt. Eines der wesentlichen Probleme bei Käfigen aus Verbundwerkstoffen, beispielsweise einem gewebeverstärkten Phenolharz mit einem Baumwollfeinstgewebe, besteht darin, dass diese Materialien meist nur bis zu etwa 120°C thermisch stabil sind und daher eine Dampfdrucksterilisation bei beispielsweise 136°C nicht möglich ist. Insbesondere für Anwendungen im medizinischen Bereich stellt dies aber ein großes Problem dar.

Andere Kunststoffe, die als Käfigwerkstoff in hochtourigen, medizintechnischen, Anwendungen zum Einsatz kommen, sind Hochleistungskunststoffe, wie Polyetheretherketon (PEEK), Polyetherketon (PEK), Polyamidimid (PAI) und Polyimid (PI), die in gleitmodifizierter Form durch Beimengung von Gleitadditiven und Fasern den Anforderungen in der Medizintechnik gerecht werden können. Allerdings sind diese nur soweit funktionsgerecht, wie günstige tribologische Bedingungen im Kugellager gewährleistet werden können.

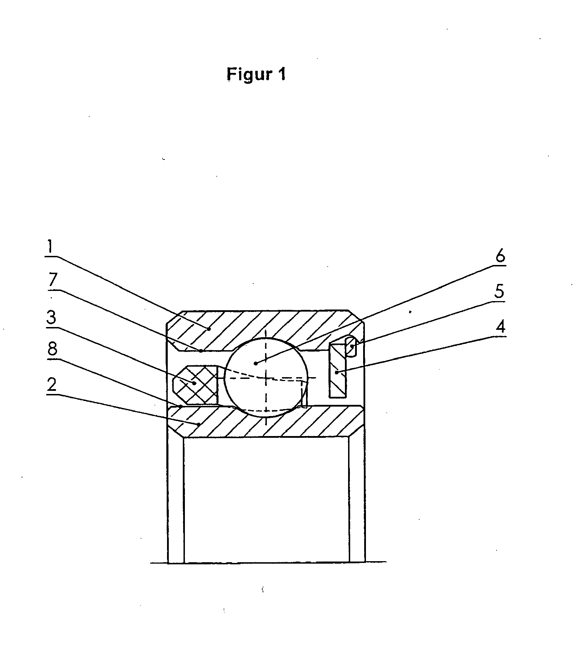

Sehr oft herrscht, insbesondere bei Anwendungen im Dentalbereich, allerdings eine Mangelschmierungssituation. Die dafür eingesetzten Kugellager können oftmals nicht mit schleifenden Abdeckungen (Dichtscheiben) versehen werden, da diese im Betrieb hohe Reibwerte erzielen und dadurch die Temperatur im Kugellager deutlich ansteigt. Insbesondere im Dental-Turbinenhandstück ist aber eine Temperaturerhöhung nicht akzeptabel, da eine Gerätetemperatur > 38°C von Zahntechnikern und Zahnärzten als sehr unangenehm empfunden wird. Diese Kugellager können deshalb nicht abgedichtet sondern nur abgedeckt werden. Eine derartige Deckscheibe hat aber den Nachteil, dass ein definierter Spalt zwischen Deckscheibe und Innenring besteht, durch den Schmiermittel nach außen gelangen kann (siehe Figur 1). Im medizinischen Bereich, insbesondere in Dental-Turbinenlagern, wird der Effekt des Schmiermittelaustritts dadurch verstärkt, dass die Versorgungsluft der Turbine nicht nur über den Abluftkanal sondern auch durch das Turbinenlager nach außen entweichen kann. Dies führt zu einem Transport des Schmiermittels (Schmierfett bzw. -öl) nach außen und dadurch zu der vorstehend beschriebenen Mangelschmierungssituation.

Beispielsweise wird in DE 198 48 051 A1 bzw. in US-A-6,113,278 ein durch Sintertechnik hergestellter Hochleistungsthermoplast (PI bzw. PAI) beschrieben, der mit einem definierten, freien Porenvolumen ausgestattet ist. In den freien Porenraum wird durch Vakuumimprägnieren ein geeignetes Schmieröl eingelagert. Dieses soll gerade in der Mangelschmierungssituation durch Fliehkräfte (im dynamischen Betrieb des Lagers) aus dem Porenraum heraustreten und so das Tribosystem im Kugellager aufrechterhalten. In der Praxis hat sich der beschriebene Mechanismus jedoch nicht bewährt, da einerseits der Käfig durch die Porosität sehr bruchempfindlich wird und andererseits der "Ölspeichereffekt" nicht lange anhält, da durch regelmäßig durchgeführte Dampfdrucksterilisationszyklen das Schmiermittel sehr schnell aus dem Porenraum herausgewaschen wird.

In DE 198 23 609 A1 werden Compounds aus Polyamid- und Perfluoralkylsubstanz(en) und Mischungen dieser Compounds mit weiteren Polymersubstanzen beschrieben, wobei modifizierte Perfluoralkylsubstanz(en) mit Polyamid-Verbindung(en) in Schmelze über eine reaktive Umsetzung homogenisiert werden. Die Verwendung dieses Materials kann dabei in Reinsubstanz oder als Zusatz/Bestandteil in Gleitlagern, in Gleitfilmen, in Gleitfolien, in Gleitlacken, in oleophoben und/oder hydrophoben oder damit ausgerüsteten Teil- oder Kompaktmaterialien, in Formteilen, in textilen Faden- und/oder Vlies- und/oder anderen textilen Flächengebilden, in Mehrschicht-(folien-)materialien, in Membranen, als Lackadditiv oder als Lacksubstanz erfolgen.

Kunststoffgleitlager, wie in DE 198 23 609 A1 erwähnt, können eingesetzt werden, wenn eine Relativbewegung zwischen zwei Lagerpartnern, z. B. Schale und Welle, ohne Schmiermittel (Schmieröl bzw. -fett) übertragen werden soll. Nachdem sich die Welle mit ihrer gesamten Mantelfläche in der Lagerschale abstützt, sind die spezifischen Flächenpressungen gegenüber dem Kunststoffgleitlager nicht besonders hoch. Selbst bei Hochleistungsgleitlagern werden maximale Umfangsgeschwindigkeiten von nur 1,5 m/s zugrundegelegt. Umgerechnet auf die Größe eines beispielsweise in der Dentaltechnik eingesetzten Lagers mit einem Bohrungsdurchmesser von 3,175 mm und einem Außendurchmesser von 6,35 mm ergibt dies nur einen Drehzahlkennwert von etwa 30.000 mm/min. Hochleistungswälzlager, wie Dental-Turbinenkugellager, rotieren jedoch mit einer Drehzahl von bis zu 500.000 min⁻¹, was einem Drehzahlkennwert von etwa 2.400.000 mm/min entspricht. Dieses Beispiel verdeutlicht, dass die Leistungsdaten eines Hochleistungswälzlagers, wie eines Dental-Turbinenlagers, in keiner Weise mit denen eines Hochleistungsgleitlagers vergleichbar sind.

Der vorliegenden Erfindung liegt somit die Aufgabe zugrunde, einen Käfig für ein Wälzlager, insbesondere für ein Kugellager, aus einem Hochleistungskunststoff bereitzustellen, der einer Sterilisationsbehandlung unterzogen werden kann, ohne die Festigkeit des Werkstoffs signifikant zu verschlechtern, und darüber hinaus trotz Mangelschmierungssituation eine verbesserte Lebensdauer und eine Eignung zur Verwendung in hochtourigen Wälz- bzw. Kugellagern, vorzugsweise im medizinischen Bereich, insbesondere in der Dentaltechnik, aufweisen soll.

Diese Aufgabe wird durch Bereitstellen der in den Ansprüchen gekennzeichneten Ausführungsformen gelöst.

Gemäß der vorliegenden Erfindung wird ein Käfig für ein Wälzlager bereitgestellt, welcher ausschließlich aus Polyamidimid (PAI) mit chemisch gekoppeltem Fluor (-co)polymer und/oder besteht.

Unter einem PAI und/oder PI und/oder PEK mit chemisch gekoppeltem Fluor-(co-) polymer versteht man ein Compound-Material, welches überwiegend aus einem PAI und/oder PI und/oder einem PEK besteht, wobei an das PAI und/oder das PI und/oder das PEK zumindest teilweise ein Fluor-(co-)polymer und/oder Fluoroligomer chemisch gekoppelt ist.

Unter einer chemischen Koppelung wird gemäß der vorliegenden Erfindung eine Verknüpfung von zumindest zwei Polymer-/Oligomerkomponenten über die Ausbildung einer chemischen Bindung verstanden. Diese Koppelung von zumindest zwei Polymer-/Oligomerkomponenten kann vollständig oder zumindest teilweise erfolgen.

Unter einem PAI versteht man Polymere, die in ihren Hauptketten sowohl Amid- als auch Imid-Funktionalitäten tragen. PAI werden durch Polykondensation von aromatischen Tricarbonsäureanhydriden wie z. B. Trimellithsäureanhydrid und/oder deren Carbonsäurehalogenid-Derivate mit Diisocyanaten oder Diaminen hergestellt. Als PAI können beispielsweise solche Polymere verwendet werden, die als Torlon^{®} (Fa. Solvay) im Handel erhältlich sind.

Unter einem PI versteht man Polymere, deren Wiederholungseinheiten über Imidgruppen gebunden vorliegen. Als PI können übliche, einem Fachmann geläufige thermoplastische oder duromere PI eingesetzt werden. Bei Einsatz chemisch gekoppelter PI-PTFE-Materialien ist dem Fachmann geläufig, dass die chemische Kopplung des PI mit dem Fluor-(co-)polymer und vorzugsweise mit PTFE vorzugsweise während der Polymersynthese und/oder während der Nachkondensation und/oder in einer nachfolgenden polymeranalogen Reaktion bei (a) duromeren PI in Lösung oder (b) bei thermoplastischen PI vorzugsweise in Schmelze erfolgt.

PI werden durch Polykondensation von aromatischen Tetracarbonsäureanhydriden wie z. B. Pyromellithsäuredianhydrid und/oder Benzophenontetracarbonsäuredianhydrid mit Diisocyanaten oder Diaminen hergestellt. Als Matrix-PI für die Kopplung mit modifiziertem PTFE können beispielsweise solche Polymere verwendet werden, die als Sintimid^{®} (Fa. Ensinger) oder als Vespel^{®} (Fa. DuPont) im Handel erhältlich sind.

Unter Polyetherketonen (PEK) versteht man Polymere, umfassend das folgende Strukturelement: 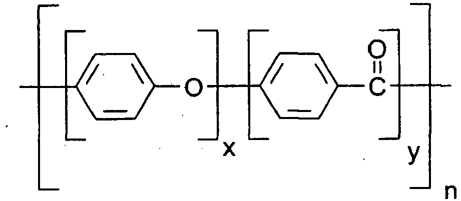 wobei x = 1 und y = 1 ist. Polyetherketone, bei denen x = 2 und y = 1 ist, werden als Polyetheretherketone (PEEK) und jene, bei denen x = 1 und y = 2 ist, werden als Polyetherketonketone (PEKK) bezeichnet. Schließlich werden Polyetherketone, bei denen x = 2 und y = 2 ist, als Polyetheretherketonketone (PEEKK) bezeichnet. Alle diese Verbindungen werden im Rahmen der vorliegenden Erfindung als Polyetherketone (PEK) verstanden. Als Polyetherketone werden vorzugsweise hochschmelzende Polymere mit einem Schmelzpunkt > 250 °C, besonders bevorzugt > 300 °C verwendet. Als PEK können beispielsweise solche Polymere verwendet werden, die als Victrex^{®} 150P oder als Victrex^{®} 450P (Fa. Victrex) im Handel erhältlich sind.

Unter einem Fluorpolymer versteht man ein organisches Polymer, bei welchem eines oder mehrere Wasserstoffatome der wiederkehrenden Einheiten der Polymerkette durch Fluoratome ersetzt sind (teilfluoriert) oder bei welchem alle Wasserstoffatome durch Fluoratome ersetzt sind (perfluoriert), wie z. B. beim PTFE oder FEP. Anstelle der Fluoratome können auch andere Halogenatome, insbesondere Chloratome, vorhanden sein, solange die gewünschten Eigenschaften des Fluorpolymers dadurch nicht beeinträchtigt werden. Das Fluorpolymer kann auch Heteroatome, wie Sauerstoff, in der Hauptkette aufweisen. Geeignete Fluorpolymere sind beispielsweise die in Römpp-Lexikon Chemie, 10. Auflage, Georg Thieme Verlag, 1997, Seiten 1393 und 1394 angegebenen Fluorpolymere. Vorzugsweise ist das Fluorpolymer ein -(CF₂)- Gruppen tragendes organisches Fluorpolymer. Als Fluorpolymer kann grundsätzlich jedes teilfluorierte oder perfluorierte organische Polymer verwendet werden, welches thermisch stabil ist, gute Gleitreibungseigenschaften aufweist und vorzugsweise strahlenchemisch modifizierbar ist, so dass reaktive funktionelle Gruppen eingeführt werden können, die mit dem Matrix-Polymer wie z. B. mit einem PAI und/oder einem PI und/oder einem PEK umsetzbar sind. Gemäß einer besonders bevorzugten Ausführungsform der vorliegenden Erfindung ist das Fluorpolymer Polytetrafluorethylen.

Der Anteil an Fluor-(co)-polymer, vorzugsweise Polytetrafluorethylen (PTFE) im Compound, bezogen auf den Gesamtwerkstoff des Käfigs, beträgt vorzugsweise 5 bis 60 Masse-%, besonders bevorzugt 10 bis 30 Masse-%.

Es ist auch möglich, dass weitere Polymere oder Oligomere, beispielsweise Polyolefine, Polymere vom Vinyltyp, Polykondensationsverbindungen und/oder Polyadditionsverbindungen, mit dem PAI und/oder PI und/oder PEK mit chemisch gekoppeltem Fluor-(co-)polymer im Gemisch vorliegen.

Ein durch chemisches Koppeln von PAI und/oder PI und/oder PEK an ein Fluor-(co-) polymer gebildetes Compound-Material kann durch Modifizieren eines Fluor-(co-) polymers mit reaktiven funktionellen Gruppen und anschließendes reaktives Umsetzen des modifizierten Fluor-(co-)polymers mit dem Matrix-Polymer wie PAI und/oder PI und/oder PEK hergestellt werden. Vorzugsweise findet die chemische Koppelung in einem Schritt des reaktiven Umsetzens eines modifizierten Fluor-(co-) polymers mit PAI und/oder PI und/oder PEK statt. Vorzugsweise wird dieses modifizierte Fluor-(co-)polymer durch einen strahlenchemischen Abbau eines Fluor-(co-)polymers, vorzugsweise PTFE, mit einer Strahlendosis von mehr als 50 kGy, vorzugsweise mehr als 100 kGy und besonders bevorzugt mit einer Strahlendosis von 500 kGy, gebildet. Ferner ist es bevorzugt, diesen strahlenchemischen Abbau in Gegenwart eines Reaktanten, insbesondere Sauerstoff, durchzuführen.

Durch eine vorstehend beschriebene Modifizierung des Fluor-(co-)polymers, beispielsweise durch das vorstehende strahlenchemische Verfahren, lassen sich funktionelle Gruppen, wie Carbonsäuregruppen und/oder Carbonsäurehalogenidgruppen und/oder olefinische Gruppen wie Perfluoralkylengruppen, an dem Fluor-(co-)polymer erzeugen, wodurch ein modifiziertes Fluor-(co-)polymer gebildet wird. Das modifizierte Fluor-(co-)polymer mit funktionellen Gruppen ist in der Lage, mit dem Matrix-Polymer wie z. B. dem PAI und/oder dem PI und/oder dem PEK vollständig oder zumindest teilweise chemisch zu koppeln. Dadurch lassen sich die vorteilhaften Materialeigenschaften der beiden Materialien in einem Compound-Material kombinieren.

Das modifizierte Fluor-(co-)polymer wird mit dem PAI und/oder PI und/oder dem PEK chemisch gekoppelt, wodurch die unverträglichen Materialien kompatibilisiert werden. Das Verfahren zum Koppeln des modifizierten Fluor-(co-)polymers mit PAI und/oder PI und/oder PEK unterliegt grundsätzlich keiner wesentlichen Beschränkung. Beispielsweise lässt sich das modifizierte Fluor-(co-)polymer durch reaktive Extrusion (Verschmelzen der Komponenten und/oder Dispergieren der Fluor-(co-)polymer-Komponente in der Matrix-Polymer-Komponente bei erhöhter Temperatur) chemisch mit PAI und/oder PI und/oder PEK koppeln (Schmelzemodifizierungsreaktion). Das modifizierte Fluor-(co-)polymer ist mindestens teilweise mit PAI und/oder PI und/oder PEK chemisch gekoppelt. Es ist jedoch auch denkbar, das Fluor-(co-)polymer durch andere, einem Fachmann geläufige Verfahren durch Einführen oder Generierung von reaktiven funktionellen Gruppen zu modifizieren und während der Matrix-Polymersynthese (in Lösung/Dispersion oder in Substanz) und/oder nachfolgend in einer polymeranalogen Reaktion (in Lösung/Dispersion) mit PAI und/oder PI und/oder PEK chemisch zu koppeln.

Für den Fall, dass das modifizierte Fluor-(co-)polymer durch Schmelzemodifizierung der Komponenten chemisch mit PAI und/oder PI und/oder PEK gekoppelt wird, ist es bevorzugt, die Komponenten in einem Kneter, einem Ein- oder Zweischneckenextruder, einem Mehrwellenkneter oder einer Spritzgießmaschine (vorzugsweise mit Compoundierschnecke) zu vermischen und mindestens teilweise zu koppeln. Die reaktive Umsetzung eines vorstehend beschriebenen modifizierten Fluor-(co-)polymers, das funktionelle Gruppen wie Carbonsäuregruppen und/oder Carbonsäurehalogenidgruppen und/oder olefinische Gruppen wie Perfluoralkylengruppen trägt, mit einem PAI und/oder einem PI und/oder einem PEK wird in der Schmelze bei einer Temperatur über dem Schmelzpunkt der Matrix-Polymerkomponente, vorzugsweise bei über 200 °C, besonders bevorzugt über 300 °C durchgeführt. Durch diese Schmelzemodifizierungsreaktion gelingt es, das modifizierte Fluor-(co-)polymer mit PAI und/oder PI und/oder PEK zumindest teilweise chemisch zu koppeln und somit ein (makroskopisch) homogenes Compound-Material zu erhalten. Ein derartiges homogenes Compound-Material unterscheidet sich wesentlich von einem Material, welches durch bloßes physikalisches Vermischen oder Schmelzen von einem (unmodifizierten) Fluorpolymer und einem PAI und/oder PI und/oder PEK erhalten wird.

Verglichen mit einem Gleitlager, wie in DE 198 23 609 A1 angeregt, gestaltet sich die Situation in einem Wälzlager gemäß der vorliegenden Erfindung, insbesondere in einem Kugellager, wie einem Dentalkugellager, wesentlich komplexer. Zur Verdeutlichung der wesentlichen Unterschiede zwischen einem Wälzlager und einem Gleitlager wird auf Figur 1 verwiesen. Der in Figur 1 beschriebene Käfig 3 kann als Kugellagerkäfig, beispielsweise als Schnappkäfig in Rillenkugellagern (wie in Figur 1 dargestellt) bzw. als Massivkäfig in Schrägkugellagern/Spindellagern eingesetzt werden. Der Käfig 3 übernimmt eine gewisse Gleitfunktion, da er sich entweder gegen die Außenringschulter 7 oder die Innenringschulter 8 abstützt. Der an diesen Gleitflächen erzeugte Verschleiß ist jedoch nicht maßgebend für die Lebensdauer der Lagerung. Geht man davon aus, dass der Außenring 1 beispielsweise in einem Dentalhandstück fixiert ist und sich der Innenring 2 mit einer Drehzahl von etwa 500.000 min"¹ dreht, so rotieren die Kugeln 6 mit ca. 1.000.000 Umdrehungen/Minute um ihre eigene Achse. Der Käfig wird über den Kugelsatz angetrieben und hat eine Drehzahl von ca. 200.000 min⁻¹. In der Dentalturbine kommt erschwerend hinzu, dass durch eine radiale Lastkomponente, die durch den Zahnarzt auf das Bohrwerkzeug übertragen wird, die Rotorwelle und somit auch die Lagerstellen verkippen. Dabei laufen die Kugeln unter einem gewissen Winkel aus der idealen Kreisbahn heraus. Dies bedeutet, dass die Kugeln innerhalb des Kugelsatzes unterschiedliche Rotationsgeschwindigkeiten annehmen und dadurch auf die einzelnen Kugeltaschen des Käfigs wechselweise Zug- und Druckbeanspruchungen übertragen. Mit der Kenntnis, dass dieser Vorgang bei Kugeldrehzahlen von 1.000.000 Umdrehungen/Minute stattfindet, sind die außergewöhnlichen Belastungen für den Käfig vorstellbar. Die Kugeltaschen verschleißen in Umfangsrichtung und dies kann sogar so weit führen, dass der Käfig durch den Kugelsatz praktisch in der Mitte durchtrennt wird. Dieser Verschleißmechanismus ist mit dem eines Kunststoff-Gleitlagers in keiner Weise zu vergleichen. Die Belastungen, die auf ein Gleitlager wirken, sind deutlich geringer, als die auf ein Wälzlager wirkenden Belastungen.

Ferner wird gemäß der vorliegenden Erfindung ein Wälzlager, umfassend einen Käfig 3, der ausschließlich aus PAI mit chemisch gekoppeltem Fluor-(co-) polymer besteht, bereitgestellt.

Insbesondere wird ein Kugellager mit einem Innenring 2 und einem koaxial dazu angeordneten Außenring 1 bereitgestellt, wobei zwischen Innenring 2 und Außenring 1 die Kugeln 6 angeordnet sind, die mittels eines Käfigs 3, der ausschliesßlich aus PAI mit chemisch gekoppeltem Fluor-(co-)polymer besteht, geführt sind.

Der erfindungsgemäße Käfig 3 ist vor allem für eine Verwendung in hochtourigen Wälzlagern wie Kugellagern, insbesondere für industrielle Spindellageranwendungen und im medizinischen Bereich, insbesondere in der Dentaltechnik, besonders geeignet. Als Beispiel für ein derartiges Wälzlager kann ein Kugellager vorgesehen werden, das üblicherweise einen Innenring, einen Außenring, Kugeln und einen Käfig umfasst, wobei sich die Kugeln auf sogenannten Laufbahnen bewegen.

Dementsprechend wird gemäß der vorliegenden Erfindung die Verwendungen eines hierin beschriebenen Käfigs in einem Wälzlager und in einem Kugellager bereitgestellt.

Durch die chemische Koppelung eines Fluor-(co-)polymers, vorzugsweise von modifiziertem Polytetrafluorethylen (PTFE) an das Matrixpolymer PAI und/oder das Matrixpolymer PI und/oder das Matrixpolymer PEK werden die (tribologischen) Eigenschaften des Compound-Materials signifikant verbessert, so dass die Lebensdauer eines Wälzlagers, das einen Käfig aus einem derartigen Compound-Material aufweist, beträchtlich gesteigert werden kann.

Der besondere Vorteil des beschriebenen Compound-Materials aus einem Fluor-(co-)polymer wie z. B. Polytetrafluorethylen und PAI und/oder PI und/oder PEK liegt vor allem in der verbesserten Dispergierung/Homogenisierung des Fluor-(co-) polymers im Matrix-Polymer PAI und/oder PI und/oder PEK und der stabilen (Verarbeitungs-)Morphologie. Dabei liegt in den Compound-Materialien die Fluor-(co-)polymer- und/oder Fluoroligomerkomponente nicht nur besser, d. h. feindisperser verteilt vor, sondern die Fluor-(co-)polymer- und/oder Fluoroligomerkomponente ist zumindest teilweise chemisch (über chemische Bindungen) mit PAI und/oder PI und/oder PEK gekoppelt. Dies ist auf einfache Weise feststellbar, da beim Lösen der Matrix-Komponente in einem geeigneten Lösungsmittel die Fluorkomponente bei erfolgter chemischer Koppelung nicht mehr oder zumindest nicht mehr vollständig als reines Fluor-(co-)polymer-Komponente abgetrennt und rückgewonnen werden kann. Als unlöslicher Rückstand wird ein Fluor-(co-)polymer mit chemisch gekoppeltem Matrixpolymer erhalten, was analytisch eindeutig nachweisbar ist.

Die chemische Koppelung von Fluor-(co-)polymeren wie z. B. Polytetrafluorethylen (PTFE) an PAI und/oder PI und/oder PEK verleiht dem Käfigwerkstoff die Eigenschaft, selbst bei Mangelschmierung nur geringfügig abrasiv zu verschleißen, ganz im Gegensatz zu den in der Medizintechnik verbreiteten und bislang verwendeten Käfigwerkstoffen aus PI (Handelsbez.: Vespel (Fa. Dupont), Meldin (Fa. Saint-Gobain), Sintimid (Fa. Ensinger)), PAI (Handelbez.: Torlon (Fa. Solvay Advanced Polymers)) und PEK (Handelsbez.: Tecapeek (Fa. Ensinger) mit physikalischer Einlagerung/Mischung der Additive). Aufgrund der chemischen Koppelung eines Fluor-(co-)polymers, vorzugsweise von Polytetrafluorethylen (PTFE) TF 2025, bestrahlt mit 500 kGy, an PAI, und/oder PI und/oder PEK können die Eigenschaften signifikant verbessert und die Lebensdauer des erfindungsgemäßen Käfigs gegenüber bislang bekannten Kunststoff-Kugellagerkäfigen beträchtlich verlängert werden. Die Lebensdauer eines Wälzlagerkäfigs bzw. Kugellagerkäfigs gemäß der vorliegenden Erfindung kann, verglichen mit bislang verwendeten Käfigen aus Hochleistungskunststoffen um ein mehrfaches verlängert werden.

Das Compound-Material aus PAI und/oder PI und/oder PEK mit chemisch gekoppeltem Fluor-(co-)polymer kann durch jedes auf dem Fachgebiet bekannte Verfahren in die entsprechende Form für einen Wälz- bzw. Kugellagerkäfig gebracht werden. Dies ist einerseits möglich durch Herstellung eines Halbzeugs (Rundmaterial bzw. Rohr) durch Spritzguss oder Extrusion. Die Weiterverarbeitung zum Fertigteil (Käfig) erfolgt dann über ein spanendes Bearbeiten (Drehen, Bohren). Nach einem Temperprozess werden die anhaftenden Grate durch Gleitschleifen entfernt. Eine weitere Möglichkeit ist die Herstellung des Fertigteils (Käfigs) direkt über Spritzguss mit anschließendem Tempern.

Figur 1 beschreibt ein Wälzlager, insbesondere ein Kugellager mit einem Innenring 2 und einem koaxial dazu angeordneten Außenring 1, wobei zwischen Innenring 2 und Außenring 1 die Kugeln 6 angeordnet sind, die mittels eines Käfigs 3 gemäß der vorliegenden Erfindung geführt sind.

Die Erfindung wird durch das nachfolgende Beispiel weiter erläutert, ohne den in der vorliegenden Erfindung beanspruchten Gegenstand dadurch einzuschränken.

### Beispiel

Ein erfindungsgemäßer Käfig in Form eines Schnappkäfigs für Dental-Turbinenlager aus dem Compound-Material, bestehend aus Polyamidimid (Torlon^{®} 4000T der Firma Solvay Advanced Polymers) und chemisch gekoppeltem PTFE (TF 2025 der Fa. Dyneon/3M, elektronenbestrahlt mit 500 kGy), wurde wie folgt hergestellt und mit einem handelsüblichen Käfig verglichen:

Das Compound-Material wurde durch Spritzgießen in Form von Rundstangen gebracht. Die spanende Fertigung von Schnappkäfigen für ein Dental-Turbinenlager (Bohrungsdurchmesser: 3,175 mm, Außendurchmesser: 6,35 mm, Breite: 2,779 mm) erfolgte an einer 1-Spindler-CNC-Drehmaschine. Nach einem Temperprozess (Standardverfahren der Firma Solvay) und einem Entgraten in einer Gleitschleifanlage wurden die erfindungsgemäßen Käfige erhalten.

Die erfindungsgemäßen Käfige wurden in Turbinenlager montiert und einem Lebensdauertest unterzogen. Als Referenzlager diente ein bis auf den Käfigwerkstoff vollkommen identisches Kugellager. Der Käfigwerkstoff des Referenzlagers war ein in der Dentaltechnik weit verbreitetes, gleitmodifiziertes Polyamidimid mit physikalisch eingemischtem Graphit (12%) und PTFE (3%) (Torlon^{®} Type 4301).

Die Lebensdauerversuche wurden auf einem automatisierten Dentalprüfstand durchgeführt, bei dem 10 Testturbinen (Dentalhandstücke) gleichzeitig gefahren wurden. Die Handstücke wurden wechselweise mit einem programmierten Belastungskollektiv, welches an den eingespannten Bohrwerkzeugen angreift, belastet und anschließend wieder entlastet. Die Ausfallgrenze für die Lebensdauer ist die im entlasteten Zustand erreichte Leerlaufdrehzahl. Wird ein gewisses Drehzahlniveau nicht mehr erreicht, so gilt das Handstück als ausgefallen.

Mit dem getesteten handelsüblichen Käfig aus Polyamidimid mit 12% Graphit und 3% PTFE (Torlon^{®} Type 4301) wurde eine mittlere Lebensdauer von 27,3 h erreicht. Der erfindungsgemäße Käfig aus Polyamidimid (Torlon^{®} 4000T und chemisch gekoppeltem PTFE (TF 2025, elektronenbestrahlt mit 500 kGy)) erreichte eine mittlere Lebensdauer von 155,5 h.

### Bezugszeichenliste

- 1: Außenring
- 2: Innenring
- 3: Wälzlagerkäfig (insbesondere Kugellagerkäfig)
- 4: Deckscheibe
- 5: Sprengring
- 6: Kugeln
- 7: Außenring-Schulter
- 8: Innenring-Schulter

## Patentansprüche

1. Käfig für ein Wälzlager in der Dentaltechnik mit einem Drehzahlkennwert n x dm > 1.000.000 mm/min, bestehend ausschließlich aus Polyamidimid (PAI) mit chemisch gekoppeltem Fluor-(co-)polymer, wobei n der Innenringdrehzahl entspricht und dm dem mittleren Lagerdurchmesser entspricht, wobei der mittlere Lagerdurchmesser dm sich berechnet aus der durch 2 dividierten Summe des Außendurchmessers und des Bohrungsdurchmessers.

2. Käfig nach Anspruch 1, wobei das Fluor-(co-)polymer Polytetrafluorethylen ist.

3. Käfig nach einem der Ansprüche 1 oder 2, wobei der Anteil an Fluor-(co)-polymer 5 bis 60 Masse-% beträgt.

4. Wälzlager, umfassend einen Käfig nach einem der Ansprüche 1 bis 3.

5. Wälzlager nach Anspruch 4, wobei das Wälzlager ein Kugellager mit einem Innenring und einem koaxial dazu angeordneten Außenring ist, wobei zwischen Innenring und Außenring Kugeln angeordnet sind, die mittels eines Käfigs nach einem der Ansprüche 1 bis 3 geführt sind.

6. Wälzlager nach Anspruch 5, wobei der Käfig ein Schnappkäfig in Rillenkugellagern oder ein Massivkäfig in Schrägkugellagern bzw. Spindellagern ist.

7. Verwendung eines Käfigs nach einem der Ansprüche 1 bis 3 in einem Wälzlager.

8. Verwendung eines Käfigs nach einem der Ansprüche 1 bis 3 in einem Kugellager.

## Claims

1. A cage for a rolling bearing in dental technology with a characteristic speed value n x dm > 1,000,000 mm/min, exclusively consisting of polyamide imide (PAI) with chemically coupled fluoro(co)polymer, wherein n is the revolutions per minute of the inner ring and dm is the mean diameter of the bearing, wherein the mean diameter of the bearing is calculated as the sum of the outer diameter and the bore diameter, which sum is divided by 2.

2. The cage according to claim 1, wherein the fluoro(co)polymer is polytetrafluoroethylene.

3. The cage according to claim 1 or 2, wherein the proportion of fluoro(co)polymer is 5 to 60% by mass.

4. A rolling bearing comprising a cage according to any one of claims 1 to 3.

5. The rolling bearing according to claim 4, wherein the rolling bearing is a ball bearing with an inner ring and an outer ring that is arranged coaxially to it, wherein balls are arranged between the inner ring and the outer ring that are held by the cage according to any one of claims 1 to 3.

6. The rolling bearing according to claim 5, wherein the cage is a snap-type cage included in grooved ball bearings or a window-type cage included in angular ball bearings or spindle bearings.

7. Use of a cage according to any one of claims 1 to 3 in a rolling bearing.

8. Use of a cage according to any one of claims 1 to 3 in a ball bearing.

## Revendications

1. Cage de roulement pour usage en technologies dentaires, ayant un coefficient de vitesse n x dm > 1.000.000 mm/min, constituée exclusivement de polyamide-imide (PAI) comportant un (co)polymère de fluor couplé chimiquement, n correspondant à la vitesse de rotation de la bague intérieure et dm correspondant au diamètre moyen du roulement, le diamètre moyen de roulement dm étant calculé à partir de la somme du diamètre extérieur et du diamètre de l'alésage, divisée par deux.

2. Cage selon la revendication 1 dans laquelle le (co)polymère de fluor est du polytétrafluoroéthylène.

3. Cage selon l'une des revendications 1 ou 2 dans laquelle la fraction de (co)polymère de fluor est de 5 à 60 % en masse.

4. Roulement comportant une cage selon l'une des revendications 1 à 3.

5. Roulement selon la revendication 4 consistant en un roulement à billes comportant une bague intérieure et une bague extérieure agencée coaxialement par rapport à la première, des billes étant agencées entre les bagues intérieure et extérieure et guidées moyennant une cage selon l'une des revendications 1 à 3.

6. Roulement selon la revendication 5 dans lequel la cage consiste en une cage à encliquetage dans des roulements rainurés, ou en une cage massive dans des roulements à billes à contact oblique ou des roulements de broche.

7. Utilisation d'une cage selon l'une des revendications 1 à 3 dans un roulement.

8. Utilisation d'une cage selon l'une des revendications 1 à 3 dans un roulement à billes.
